# FASCICULE DE BREVET EUROPEEN

(11) **EP 0 851 831 B1**
(45) Date de publication et mention de la délivrance du brevet: **02.04.2003**
(21) Numéro de dépôt: 97925124.6
(22) Date de dépôt: 23.05.1997
(51) Int. Cl.: B65D 47/26

(54) **CAPSULE DISTRIBUTRICE A ORIFICE EXCENTRE POUR RECIPIENT, ET SON PROCEDE DE FABRICATION**
SPENDERKAPPE MIT AUSSERMITTIG ANGEORDNETER ABGABEöFFNUNG, SOWIE VERFAHREN ZU DEREN HERSTELLUNG
CONTAINER DISPENSER CAPSULE WITH OFF-CENTRE APERTURE, AND ITS METHOD OF MANUFACTURE.

(30) Priorité: 24.05.1996 FR 9606455; 11.02.1997 FR 9701563
(43) Date de publication de la demande: 08.07.1998
(73) Titulaire: Defi International, 95230 Soisy-sous-Montmorency (FR)
(72) Inventeur: GONCALVES, Agnès, F-95230 Soisy Sous Montmorency (FR)
(74) Mandataire: Chambon, Gérard
(86) Numéro de dépôt international: FR9700905
(87) Numéro de publication internationale: WO97045330

(56) Documents cités:
- WO-A-95/11172
- FR-A- 2 160 318
- GB-A- 1 576 126

## Description

L'invention concerne une capsule distributrice à orifice excentré, pour récipient contenant un produit à distribuer et plus particulièrement un produit liquide ou pâteux.

Les capsules distributrices remplacent avantageusement les simples bouchons à dévisser, lesdites capsules restant attenantes au récipient, tandis que l'ouverture et la fermeture s'effectuent par une manoeuvre particulière de la capsule.

On connaît par exemple une capsule comportant d'une part, un capuchon muni d'un orifice central de distribution qui est monté vissable et dévissable entre au moins deux positions, au moyen d'au moins un filetage prévu sur la bague du récipient, et d'autre part, un réducteur solidaire ou rapporté sur la bague et pourvu d'un embout d'obturation, de manière à obturer à volonté l'orifice du capuchon en fonction de sa position sur la bague. Avec ce type de capsule, après utilisation et fermeture, un reliquat de produit plus ou moins important subsiste généralement sur le dessus du capuchon.

On connaît aussi une capsule pour récipient comportant un couvercle ou réducteur solidaire ou rapporté de manière fixe sur le récipient et un capuchon monté rotatif relativement audit couvercle, ce dernier et le capuchon étant munis chacun d'un orifice excentré de manière à pouvoir assurer l'ouverture et la fermeture de la capsule en superposant ou respectivement en décalant lesdits orifices l'un par rapport à l'autre au cours de la rotation du capuchon.

Dans ce cas, la rotation du capuchon s'effectue dans un plan, c'est-à-dire sans vissage ou dévissage.

A titre d'exemple, on peut citer les documents US-A-2,324,032 pour produits poudreux, DE-1 143 440, ou encore WO-9511172 selon l'un de ses modes de réalisation.

Les systèmes existant pour les produits liquides ou pâteux n'offrent généralement pas une bonne étanchéité au produit et d'une manière générale aussi, la position d'ouverture par superposition des orifices est souvent aléatoire. Dans le dernier document cité, on a été obligé de prévoir toutes les surfaces qui sont en contact en position d'ouverture et de fermeture, sous la forme de lèvres d'étanchéité dont les profils doivent être particulièrement étudiés.

C'est pourquoi l'inventeur propose une capsule du type précité, mais qui est remarquable en ce que la face interne du dessus du capuchon comporte un joint pourvu ou formant une membrane excentrée à fentes qui est disposée sous l'orifice du capuchon, tandis que le réducteur présente deux cheminées en saillie décafées angulairement, qui sont excentrées de la même valeur que ledit orifice du capuchon, et dont les extrémités en contact avec ledit joint sont respectivement fermée et ouverte, l'orifice du réducteur étant constitué par l'ouverture de ladite cheminée ouverte de telle sorte que l'ouverture et respectivement la fermeture de la capsule, s'effectuent par rotation du capuchon et en superposant l'orifice du capuchon et sa membrane à fentes avec la cheminée ouverte ou respectivement la cheminée fermée du réducteur.

Selon un mode de réalisation, le capuchon est pourvu d'un ajour qui permet de faire apparaître le joint de manière à constituer une marque à aligner avec des signes repères distinctifs fixes pour repérer les positions ouverte et fermée de la capsule.

A titre complémentaire ou selon un autre mode de réalisation, la paroi latérale du capuchon porte une marque destinée à être alignée avec des signes repères distinctifs fixes pour repérer les positions ouverte et fermée de la capsule.

Par exemple, les signes repères fixes sont aménagés sur une embase périphérique du réducteur.

Le récipient peut être un flacon ou un tube sur lequel est fixé le réducteur.

Divers autres moyens peuvent aussi être prévus.

C'est ainsi par exemple, que le capuchon peut être pourvu d'au moins une barrette longitudinale interne destinée à coopérer avec des crans prévus sur une embase du réducteur afin de verrouiller temporairement le capuchon dans les positions d'ouverture et de fermeture.

Le capuchon peut en outre comporter au moins une butée de fin de course destinée à coopérer avec des butées conjuguées aménagées sur le réducteur pour limiter le mouvement rotatif du capuchon entre les positions d'ouverture et de fermeture. Dans ce cas et selon un mode de réalisation particulier, la butée du capuchon se déplace dans une gouttière annulaire formée par deux parois concentriques du réducteur entre lesquelles sont prévues les butées dudit réducteur.

On peut aussi prévoir que le capuchon et le réducteur comportent des barrettes destinées à passer en force l'une sur l'autre lors de la rotation dudit capuchon pour l'ouverture et la fermeture en réalisant un signal sonore.

Avantageusement, le joint du capuchon est réalisé par surmoulage.

Après fabrication du capuchon par injection, par exemple de polypropylène, il est connu de surmouler une pièce, tel un joint, au cours d'une seconde opération après transfert sur un autre poste et au moyen d'un autre outillage, d'où des cadences de fabrication faibles alors qu'il est en outre très difficile d'obtenir des parois fines pour chacune des pièces.

C'est pourquoi dans le cas d'un capuchon fabriqué dans un moule d'injection pourvu d'au moins un demi-moule fixe et un demi-moule mobile, l'invention propose un procédé de fabrication tout à fait original et intéressant, qui est remarquable en ce que le surmoulage du joint est effectué aussi par injection dans le même moule d'injection qui a servi pour le moulage du capuchon, après un simple recul d'au moins une partie du demi-moule mobile et au moyen d'au moins une ouverture ménagée sur le dessus du capuchon, ouverture ensuite obturée au moins par la matière constitutive du joint.

Dans un tel cas, le joint, par exemple en élastomère, qui peut être particulièrement mince, est parfaitement scellé à la paroi interne du dessus du capuchon, tandis que la membrane à fentes disposée sous l'orifice conserve toute sa souplesse. En outre, le procédé selon l'invention permet d'abaisser les coûts et d'augmenter les cadences puisqu'il n'y a qu'un seul moule.

L'invention sera bien comprise et d'autres particularités apparaîtront à la lecture de la description qui va suivre et qui se réfère aux dessins annexés dans lesquels:
- la figure 1 est une coupe axiale d'une capsule selon l'invention, en position de fermeture,
- la figure 2 est une vue de dessus de la capsule de la figure 1,
- la figure 3 est une vue de dessus simplifiée (sans pointillés) et en position de fermeture,
- la figure 4 est une vue en élévation d'un capuchon selon l'invention,
- la figure 5 est une vue de dessus du capuchon de la figure 4,
- la figure 6 est une vue en élévation d'un réducteur selon l'invention,
- la figure 7 est une vue de dessus du réducteur de la figure 6,
- la figure 8 est une coupe axiale d'une capsule selon l'invention, plus particulièrement destinée à équiper un tube,
- la figure 9 est une vue de dessus du mode de réalisation de la figure 8 sans son capuchon,
- les figures 10 à 13 montrent schématiquement quatre modes de réalisation de membranes à fentes,
- la figure 14 montre en partie un moule d'injection pour la fabrication du capuchon d'une capsule selon l'invention.

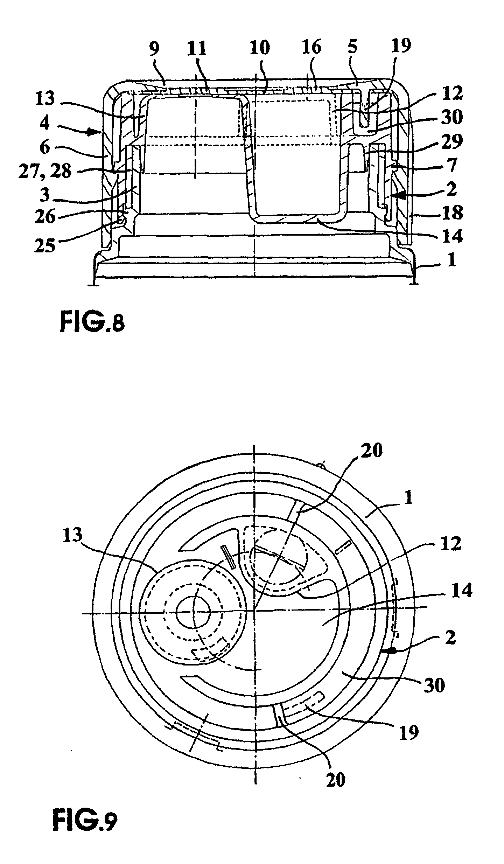

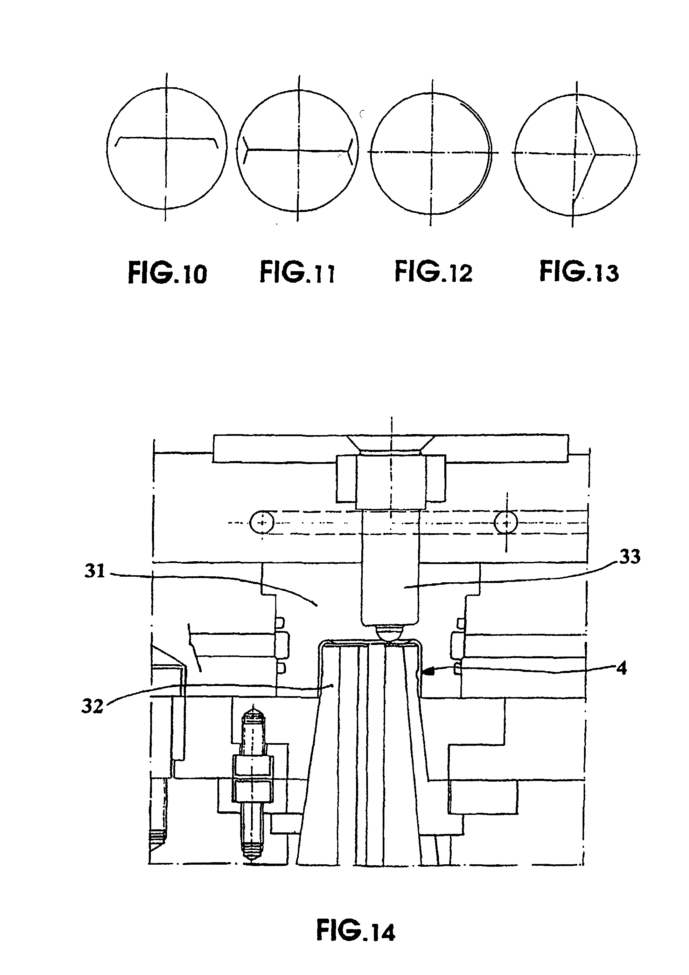

Le mode de réalisation des figures 8 et 9 est très voisin du mode de réalisation des autres figures de telle sorte que les pièces semblables ou analogues portent les mêmes références.

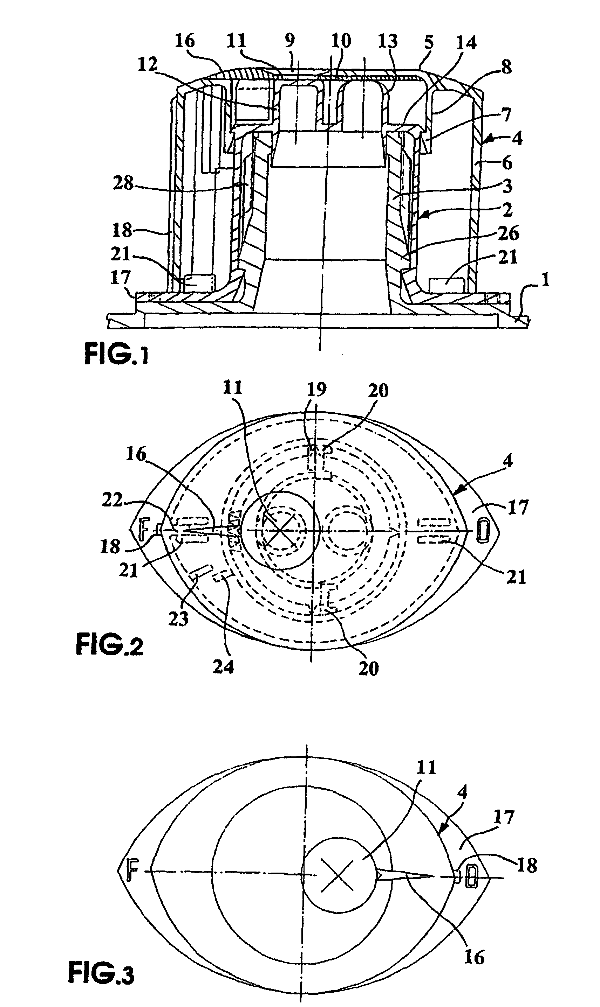

Une capsule selon l'invention est destinée à équiper un récipient 1 sous forme, par exemple, de flacon (figure 1) ou de tube (figures 8 et 9).

La capsule selon l'invention comporte un réducteur 2 qui est fixé ou rapporté sur la bague 3 du récipient 1, mais ledit réducteur 2 pourrait constituer directement la tête dudit récipient 1.

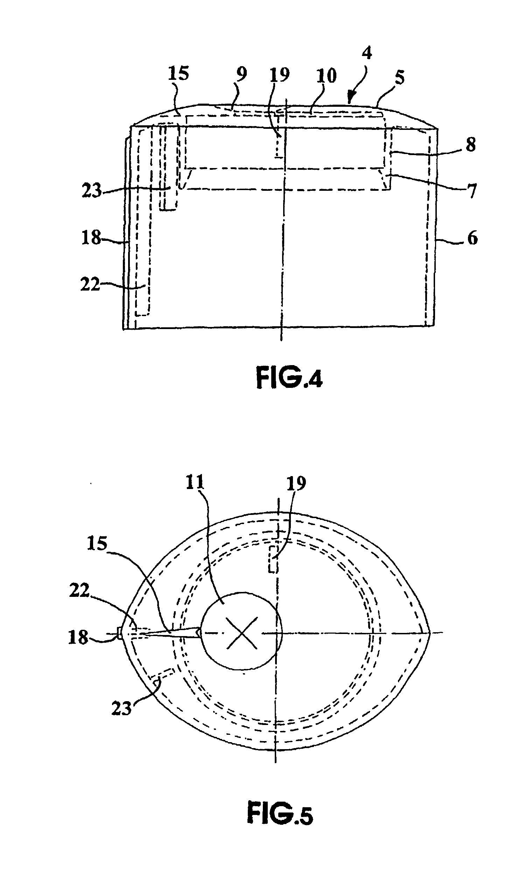

Le réducteur 2 est coiffé par un capuchon 4 qui est formé d'une partie supérieure ou dessus 5 et d'une paroi latérale 6 (de forme extérieure biconvexe sur les figures 1 à 5 et circulaire sur les figures 8 et 9) et qui est monté rotatif sur ledit réducteur 2, par exemple par accrochage au moyen d'une nervure 7 prévue dans une jupe intérieure 8 (figures 1 et 4) ou sur la partie intérieure de la paroi latérale 6 du capuchon 4 (figure 8) et qui est destinée à coopérer avec une nervure conjuguée du réducteur.

Le dessus 5 du capuchon 4 est muni d'un orifice excentré et évasé 9 tandis que la paroi interne du dessus 5 est pourvue d'un joint 10, par exemple en élastomère, lequel joint est équipé ou constitue une membrane excentrée 11 à fentes disposée sous ledit orifice 9 du capuchon. Les fentes de la membrane 11 sont par exemple réalisées en reprise au moyen d'un poinçon, ce qui permet auxdites fentes de conserver une mémoire de forme et de reprendre ainsi leur position d'origine après déformation sous pression.

Toutes sortes de fentes sont imaginables comme le montrent les figures 2, 3, 5 et 10 à 13 représentant des fentes rectilignes en croix (figures 2, 3, 5) ou avec des extrémités formant des angles (figures 10 et 11), ou en arc de cercle (figure 12), ou encore en V (figure 13), etc.

Le joint 10 est avantageusement surmoulé dans le capuchon 4, comme il sera expliqué ci-après.

Le réducteur 2, comme le montrent bien les figures 1, 6 et 8, comporte deux cheminées 12 et 13, diamétralement opposées pour le mode de réalisation des figures 1 à 7, qui font saillie d'un plateau 14 (plus visible sur les figures 1, 6 et 8) et qui sont excentrées de la même valeur que l'orifice 9 et la membrane 11. Les cheminées 12 et 13 présentent des extrémités respectivement fermée et ouverte qui arrivent au niveau de la face intérieure du joint 10, l'ouverture de la cheminée 13 pouvant être pourvue d'une lèvre d'étanchéité.

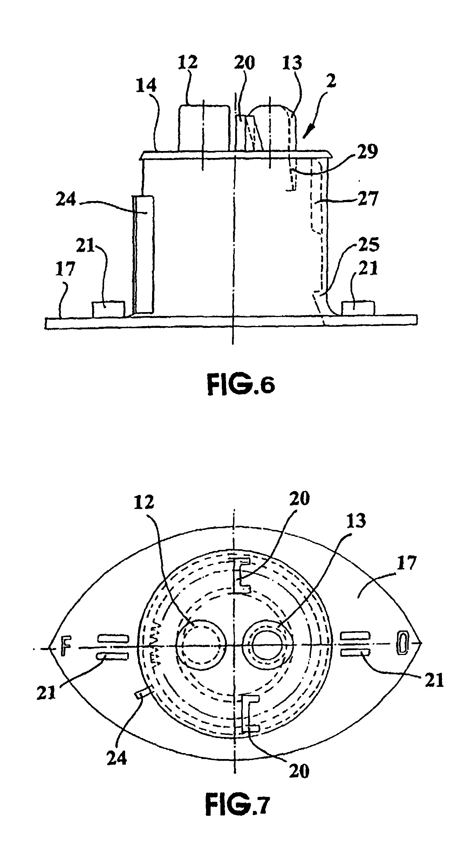

Le dessus 5 du capuchon 4 comporte en outre un ajour 15 (figures 4, 5) en forme de flèche qui laisse ainsi apparaître une partie 16 du joint 10 (figures 1 à 3 et 8) de manière à pouvoir s'aligner sur des signes repères fixes, par exemple gravés ou en saillie sur une embase 17 du réducteur 2 (figures 1 à 3 et 6) ou sur le récipient 1 lui-même.

Les signes repères sont, par exemple, les lettres "O" (comme "Ouvert") et "F" (comme "Fermé") tandis que l'embase 17 peut être perpendiculaire à la paroi latérale 6 du capuchon 4 (figures 1 à 3, 6 et 7).

A la place ou de manière complémentaire, une marque 18 (figures 1 à 5 et 8), par exemple en saillie, est aménagée sur la paroi latérale 6 du capuchon.

La flèche 16 et/ou les marques 18, en s'alignant sur les signes repères "O" et "F", permettent de repérer les positions d'ouverture et de fermeture (visible de dessus et/ou latéralement), comme il sera expliqué ci-après.

Le capuchon 4 comporte en outre une butée 19 de fin de course (figures 2, 4, 5, 8 et dont la position est schématisée en trait mixte sur la figure 9) destinée à coopérer avec des butées 20 aménagées sur le plateau 14 du réducteur (figures 2, 6, 7 et 9). Dans le mode de réalisation des figures 8 et 9, la butée 19 du capuchon 4 se déplace en outre dans une gouttière annulaire 30 formée par deux parois concentriques du réducteur entre lesquelles sont prévues les butées 20 dudit réducteur, tandis que l'embase 17 du mode de réalisation des figures 1 à 7 est pourvue de crans 21 (figures 1, 2, 6 et 7) diamétralement opposés destinés à coopérer avec une barrette longitudinale interne 22 aménagée sur la partie intérieure de la paroi latérale 6 du capuchon 4 (figures 2, 4 et 5).

De plus, le capuchon 4 et le réducteur 2 sont pourvus de barrettes respectivement 23 et 24 (figures 2, 4 à 7) à passage en force, comme il sera expliqué ci-après.

On met en place le réducteur 2 sur le récipient 1, par scellage ou comme ici par accrochage au moyen, par exemple, de nervures conjuguées 25, 26 prévues sur le réducteur (figures 6 et 8) et respectivement sur la bague 3 du récipient (figures 1 et 8) et de cannelures antirotation 27, 28 disposées sur le réducteur et respectivement à l'extérieur de la bague 3 (figures 1, 6 et 8), une jupe intérieure 29 du réducteur (figures 6 et 8) venant se loger dans la bague 3, puis on fixe le capuchon 4 rotatif comme précisé ci-avant.

L'utilisation est simple à comprendre.

Dans la position fermée de la figure 1, la cheminée fermée 12 du réducteur 2 se trouve sous la membrane 11 et empêche tout passage du produit, tandis que l'extrémité ouverte de la cheminée 13 est obturée par le joint 10 sur lequel ladite cheminée est en légère pression.

Dans cette position, la butée 19 du capuchon est au contact de l'une des butées 20 du réducteur et la barrette 22 du capuchon se trouve dans l'un des crans 21 de l'embase du réducteur (figure 2), ce qui assure un parfait positionnement et un verrouillage temporaire.

On remarquera aussi que dans cette position, la marque 18 et la flèche 16 du capuchon sont alignées sur le signe "F" du réducteur.

Pour ouvrir la capsule, il suffit de faire toumer le capuchon 4 d'un demi-tour dans le mode de réalisation des figures 1 à 7 et un peu moins pour le mode de réalisation des figures 8 et 9, dans le sens trigonométrique en regardant le dessus du capuchon, de telle sorte que la barrette 22 vient se verrouiller dans le cran 21 diamétralement opposé du réducteur, de même que la butée 19 vient au contact de l'autre butée 20 dudit réducteur.

Au cours de ce mouvement, un signal sonore est engendré par le passage en force des barrettes 23, 24 tandis que la marque 18 et la flèche 16 s'alignent sur le signe "O" du réducteur.

Dans cette position (figures 3 et 8), on constate que la cheminée ouverte 13 vient se placer sous la membrane 11 à fentes et on comprend que le produit peut être distribué à travers les fentes de la membrane par pression sur le récipient.

On comprend aussi que la membrane à fentes assure une protection anti-impuretés du fait qu'elle est par nature auto-refermable, la forme et le nombre des fentes étant choisis en fonction notamment de la viscosité du produit. Cette membrane permet en outre d'éviter tout écoulement intempestif du produit.

Enfin, pour fermer la capsule, il suffit bien entendu d'effectuer un mouvement inverse, la rotation dans un plan assurant une propreté parfaite au cours du maniement.

D'autres particularités peuvent bien sûr être imaginées sans sortir du cadre de l'invention, comme par exemple une pastille arrachable de protection, prévue au-dessus de l'orifice de distribution et qui est destinée à être retirée avant la première utilisation.

En outre, la face interne du dessus 5 du capuchon peut avantageusement présenter un petit dôme en saillie vers l'intérieur, destiné à venir s'introduire, en position fermée, dans l'ouverture de la cheminée 13, tandis que ledit dôme peut ne pas être recouvert par le joint 10, ce qui n'empêche pas le bord de ladite ouverture éventuellement pourvu, comme déjà dit, d'une lèvre d'étanchéité, de venir s'appliquer sur ledit joint 10.

Le capuchon 4 est, par exemple, obtenu par injection de polypropylène dans un moule du type de celui représenté à la figure 14 et comportant essentiellement un demi-moule fixe 31 et un demi-moule mobile 32 actionné classiquement par un piston.

Selon un procédé original et avantageux, comme déjà dit, après moulage du capuchon 4, par exemple par un canal disposé vers ce qui sera la base de sa paroi latérale 6 et au moyen d'une buse d'injection classique non représentée, on procède successivement à l'injection du joint 10 dans le même moule en reculant légèrement le moule mobile 32, par exemple de 0,2 millimètre et en injectant un élastomère au moyen d'une buse d'injection 33, de préférence chaude, comme le montre la figure 14.

Sur la figure 14, on constate bien que le demi-moule 32 qui a servi au moulage du capuchon, est légèrement reculé de l'épaisseur voulue pour le joint 10.

Cette deuxième injection est effectuée par une ouverture prévue dans le capuchon 4, par exemple par l'ajour 15 (figures 4 et 5) dont il a été question ci-avant et qui laisse apparaître une partie 16 dudit joint.

Toutefois, il est même possible selon les applications de ne prévoir qu'un tout petit trou d'injection rebouché par la suite.

## Revendications

1. Capsule distributrice pour récipient (1) comportant un réducteur (2) de passage du produit, solidaire ou rapporté de manière fixe sur le récipient et un capuchon (4) formant coiffe, monté rotatif relativement audit réducteur, ce dernier et le capuchon étant munis chacun d'un orifice excentré (9) de manière à pouvoir assurer l'ouverture et la fermeture de la capsule en superposant ou respectivement en décalant lesdits orifices l'un par rapport à l'autre au cours de la rotation du capuchon, capsule ***caractérisée en ce que*** la face interne du dessus (5) du capuchon (4) comporte un joint (10) pourvu ou formant une membrane (11) excentrée à fentes qui est disposée sous l'orifice (9) du capuchon, tandis que le réducteur (2) présente deux cheminées en saillie (12,13), décalées angulairement, qui sont excentrées de la même valeur que ledit orifice (9) du capuchon, et dont les extrémités en contact avec ledit joint (10) sont respectivement fermée et ouverte, l'orifice du réducteur étant constitué par l'ouverture de ladite cheminée ouverte (13) de telle sorte que l'ouverture et respectivement la fermeture de la capsule, s'effectuent par rotation du capuchon et en superposant l'orifice (9) du capuchon et sa membrane (11) à fentes avec la cheminée ouverte (13) ou respectivement la cheminée fermée (12) du réducteur (2).

2. Capsule selon la revendication 1, ***caractérisée en ce que*** le capuchon (4) est pourvu d'un ajour (15) qui permet de faire apparaître le joint (10) de manière à constituer une marque (16) à aligner avec des signes repères distinctifs fixes pour repérer les positions ouverte et fermée de la capsule.

3. Capsule selon l'une des revendications 1 ou 2, ***caractérisée en ce que*** la paroi latérale (6) du capuchon (4) porte une marque (18) destinée à être alignée avec des signes repères distinctifs fixes pour repérer les positions ouverte et fermée de la capsule.

4. Capsule selon l'une des revendications 2 ou 3, ***caractérisée en ce que*** les signes repères fixes sont aménagés sur une embase (17) périphérique du réducteur (2).

5. Capsule selon l'une des revendications 1 à 4, ***caractérisée en ce que*** le capuchon (4) est pourvu d'au moins une barrette longitudinale interne (22) destinée à coopérer avec des crans (21) prévus sur une embase (17) du réducteur (2) afin de verrouiller temporairement le capuchon dans les positions d'ouverture et de fermeture.

6. Capsule selon l'une des revendications 1 à 5, ***caractérisée en ce que*** le capuchon (4) comporte au moins une butée (19) de fin de course destinée à coopérer avec des butées (20) conjuguées aménagées sur le réducteur (2) pour limiter le mouvement rotatif du capuchon entre les positions d'ouverture et de fermeture.

7. Capsule selon la revendication 6, ***caractérisée en ce que*** la butée (19) du capuchon (4) se déplace dans une gouttière annulaire (30) formée par deux parois concentriques du réducteur entre lesquelles sont prévues les butées (20) dudit réducteur.

8. Capsule selon l'une des revendications 1 à 7, ***caractérisée* en *ce que*** le capuchon (4) et le réducteur (2) comportent des barrettes (23,24) destinées à passer en force l'une sur l'autre lors de la rotation dudit capuchon pour l'ouverture et la fermeture en réalisant un signal sonore.

9. Capsule selon l'une des revendications 1 à 8, ***caractérisée en ce que*** le joint (10) du capuchon (4) est réalisé par surmoulage.

10. Capsule selon la revendication 9 dont le capuchon est fabriqué dans un moule d'injection pourvu d'au moins un demi-moule fixe (31) et un demi-moule mobile (32), ***caractérisée en ce que*** le surmoulage du joint (10) est effectué aussi par injection dans le même moule d'injection qui a servi pour le moulage du capuchon, après un simple recul d'au moins une partie du demi-moule mobile (32) et au moyen d'au moins une ouverture ménagée sur le dessus du capuchon (4), ouverture ensuite obturée au moins par la matière constitutive du joint.

## Claims

1. Dispensing cap for a receptacle (1) comprising a reducer (2) for passage of the product integral with or fixedly fitted to the receptacle and a hood (4) forming a top, mounted rotatable relative to said reducer, the latter and the hood each being provided with an eccentric orifice (9) so as to be able to open and close the cap by respectively superposing or offsetting said orifices one in relation to the other in the course of rotation of the hood, said cap being **characterised in that** the internal face of the top (5) of the hood (4) comprises a seal (10) provided with or forming an eccentric slotted membrane (11) which is disposed under the orifice (9) of the hood, while the reducer (2) exhibits two angularly offset projecting shafts (12, 13) which are eccentric by the same value as said orifice (9) of the hood, and the ends of which in contact with said seal (10) are respectively closed and open, the orifice of the reducer being constituted by the opening of said open shaft (13) such that the opening and the closure respectively of the cap are effected by rotating the hood and superposing the orifice (9) of the hood and its slotted membrane (11) with the open shaft (13) or the closed shaft (12) respectively of the reducer (2).

2. Cap according to claim 1, **characterised in that** the hood (4) is provided with an opening (15) which makes it possible to reveal the seal (10) so as to constitute a mark (16) to be aligned with fixed distinctive marking symbols to mark the open and closed positions of the cap.

3. Cap according to one of claims 1 or 2, **characterised in that** the side wall (6) of the hood (4) bears a mark (18) designed to be aligned with fixed distinctive marking symbols to mark the open and closed positions of the cap.

4. Cap according to one of claims 2 or 3, **characterised in that** the fixed marking symbols are arranged on a peripheral base (17) of the reducer (2).

5. Cap according to one of claims 1 to 4, **characterised in that** the hood (4) is provided with at least one internal longitudinal bar (22) designed to co-operate with notches (21) provided on a base (17) of the reducer (2) in order to temporarily lock the hood in the open and closed positions.

6. Cap according to one of claims 1 to 5, **characterised in that** the hood (4) comprises at least one end of travel stop (19) designed to co-operate with twin stops (20) arranged on the reducer (2) to limit the rotational movement of the hood between the open and closed positions.

7. Cap according to claim 6, **characterised in that** the stop (19) of the hood (4) moves in an annular gutter (30) formed by two concentric walls of the reducer between which the stops (20) of said reducer are provided.

8. Cap according to one of claims 1 to 7, **characterised in that** the hood (4) and the reducer (2) comprise bars (23, 24) designed to pass forcibly one over the other during the rotation of said hood for opening and closure, producing an acoustic signal.

9. Cap according to one of claims 1 to 8, **characterised in that** the seal (10) of the hood (4) is produced by moulding.

10. Cap according to claim 9, the hood of which is made in an injection mould provided with at least one fixed mould half (31) and one moving mould half (32), **characterised in that** the moulding of the seal (10) is also effected by injection into the same injection mould used for moulding of the hood, after simple withdrawal of at least a portion of the moving mould half (32) and by means of at least one opening formed in the top of the hood (4), said opening then being blocked at least by the material forming the seal.

## Patentansprüche

1. Spenderkappe für einen Behälter (1) mit einem einstückigen oder zusammengesetzten, auf dem Behälter fixierten Reduzierstück (2) für den Durchtritt des Produkts und einer einen Deckel bildenden Haube (4), die drehbar in Bezug auf das Reduzierstück angebracht ist, wobei dieses letztere und die Haube jeweils mit einer außermittigen Öffnung (9) versehen sind, so dass Öffnen und Verschließen der Kappe durch Überlagerung bzw. Versatz der Öffnungen gegeneinander während der Drehung der Haube garantiert werden, **dadurch gekennzeichnet, dass** die Innenfläche des Oberteils (5) der Haube (4) eine Dichtung (10) umfasst, die eine geschlitzte außermittige Membran (11) bildet oder mit einer solchen versehen ist, die unter der Öffnung (9) der Haube angeordnet ist, während das Reduzierstück (2) zwei vorspringende, um einen Winkel versetzte Schächte (12, 13) aufweist, die um denselben Wert wie die Öffnung (9) der Haube außermittig sind und deren die Dichtung (10) berührenden Enden geschlossen bzw. offen sind, wobei die Öffnung des Reduzierstücks durch die Mündung des offenen Schachts (13) gebildet wird, derart, dass Öffnen bzw. Verschließen der Kappe durch Drehen der Haube mittels Drehung der Haube durch Überlagerung der Öffnung (9) der Haube und ihrer geschlitzten Membran (11) mit dem offenen Schacht (13) bzw. mit dem geschlossenen Schacht (12) des Reduzierstücks (2) bewirkt werden.

2. Kappe nach Anspruch 1, **dadurch gekennzeichnet, dass** die Haube (4) mit einem Durchbruch (15) versehen ist, der die Dichtung (10) sichtbar werden lässt, so dass diese eine Markierung darstellt, die mit festen Markierungskennzeichen ausgerichtet werden kann, um die geschlossene bzw. die offene Position der Kappe aufzufinden.

3. Kappe nach einem der Ansprüche 1 oder 2, **dadurch gekennzeichnet, dass** die Seitenwand (6) der Haube (4) eine Marke (18) trägt, die dazu bestimmt ist, mit den festen Markierungskennzeichen ausgerichtet zu werden, um die geschlossene bzw. die offene Position der Kappe aufzufinden.

4. Kappe nach einem der Ansprüche 2 oder 3, **dadurch gekennzeichnet, dass** die festen Markierungszeichen auf einer umlaufenden Fußplatte (17) des Reduzierstücks (2) angebracht sind.

5. Kappe nach einem der Ansprüche 1 bis 4, **dadurch gekennzeichnet, dass** die Haube (4) mit mindestens einem inneren Längssteg (22) versehen ist, der mit in der Fußplatte (17) des Reduzierstücks (2) vorgesehenen Rastkerben (21) zusammenwirken soll, um die Haube vorübergehend in der offenen und der geschlossenen Position zu verriegeln.

6. Kappe nach einem der Ansprüche 1 bis 5, **dadurch gekennzeichnet, dass** die Haube (4) mindestens einen Anschlag (19) aufweist, der mit zugeordneten, am Reduzierstück (2) angebrachten Anschlägen (20) zusammenwirken soll, um die Drehbewegung der Haube (4) zwischen der offenen und der geschlossenen Position zu begrenzen.

7. Kappe nach Anspruch 6, **dadurch gekennzeichnet, dass** der Anschlag (19) der Haube (4) sich in einer Ringnut (30) bewegt, die aus zwei konzentrischen Wänden des Reduzierstücks gebildet wird, zwischen denen die Anschläge (20) des Reduzierstücks vorgesehen sind.

8. Kappe nach einem der Ansprüche 1 bis 7, **dadurch gekennzeichnet, dass** die Haube (4) und das Reduzierstück (2) Stege (23, 24) aufweisen, die dazu bestimmt sind, bei der Drehung der Haube zum Öffnen und Schließen aneinander vorbei gezwängt zu werden, wodurch ein akustisches Signal entsteht.

9. Kappe nach einem der Ansprüche 1 bis 8, **dadurch gekennzeichnet, dass** die Dichtung (10) der Haube (4) durch Abformen hergestellt wird.

10. Kappe nach Anspruch 9, deren Haube in einer Spritzgussform, die mit mindestens einer festen (31) und einer beweglichen (32) Formhälfte versehen ist, hergestellt wurde, **dadurch gekennzeichnet, dass** das Abformen der Dichtung (10) ebenfalls durch Spritzgießen in derselben Spritzgussform erfolgt, die zum Formen der Haube gedient hatte, und zwar nach einfachem Zurückfahren mindestens eines Teils der beweglichen Formhälfte (32) und mittels mindestens einer im Oberteil der Haube (4) angebrachten Öffnung, welche danach durch mindestens das die Dichtung bildende Material verschlossen wird.
